# EUROPEAN PATENT APPLICATION

(11) **EP 2 803 872 A1**
(43) Date of publication of application: **19.11.2014**
(21) Application number: 13735612.7
(22) Date of filing: 10.01.2013
(51) Int. Cl.: F16C 11/04, B23K 26/20

(54) **PIVOTAL MOUNTING STRUCTURE AND PIVOTAL MOUNTING METHOD FOR RELATIVE ROTATING MEMBER**

(30) Priority: 12.01.2012 JP 2012003714
(71) Applicant: Shiroki Corporation, Fujisawa-shi, Kanagawa 252-0811 (JP)
(72) Inventor: SUZUKI, Hiroyuki, Fujisawa-shi Kanagawa 252-0811 (JP)
(74) Representative: Schaumburg, Thoenes, Thurn, Landskron, Eckert
(86) International application number: PCT/JP2013/050283
(87) International publication number: WO 2013/105593

(57) **Abstract**

A pivotal attaching structure and a pivotal attaching method, are provided, with which a rotary arm member can be rotatably supported in a retained state with no need to perform mechanical swaging. A pivotal attaching structure for relatively rotating members includes at least one intermediate arm member having a rotational center hole; a central-pivot providing member which includes a central-pivot portion that is inserted into the rotational center hole of the intermediate arm member to be freely rotatable relative to the rotational center hole and a retaining portion which is orthogonal to the central-pivot portion; and a retaining member which is fitted on the periphery of the central-pivot portion of the central-pivot providing member to prevent the intermediate arm member that is fitted on the central-pivot portion from moving in the axial direction between the retaining member and the retaining portion, the central-pivot portion of the central-pivot providing member and the retaining member are fixed to each other by laser welding.

## Description

### TECHNICAL FIELD

The present invention relates to a pivotal attaching structure and a pivotal attaching method for relatively rotating members.

### BACKGROUND ART

A pivotal attaching structure in which a rotating arm member is pivoted by (on) a rotational center shaft has been used in various parts of mechanical devices. In the motor vehicle field, the pivotal attaching structure has been widely used in door lock apparatuses, seat lifting apparatuses, X-arm type door glass lifting apparatuses and the like. In this type of pivotal attaching structure, swaging (caulking) a metal member (plastically deforming a metal member by mechanically exerting an external force thereon) to retain the rotatingmember has been widely carried out (Patent Literature 1).

### CITATION LIST

### PATENT LITERATURE

Patent Literature 1: Japanese Unexamined Patent Publication No. 2006-43729

### SUMMARY OF INVENTION

### TECHNICAL PROBLEM

However, large machinery is required for swaging. Additionally, although no problem arises if only a member to be swaged is deformed, there is a high possibility of the peripheral member(s) being deformed (warped), which may interfere with the smooth rotational motion of the pivotal attaching structure.

An object of the present invention is to obtain a pivotal attaching structure and a pivotal attaching method which resolve the problems of conventional mechanical swaging and make it possible to pivot relatively rotating members in a retained state with no need to use mechanical swaging.

### SOLUTION TO PROBLEM

The present invention has been completed based on the viewpoint that, due to laser welding, relatively rotating members can be pivotally attached in a retained state without requiring large machinery and with no mechanical deformation being produced at all.

In an embodiment of a pivotal attaching structure for relatively rotating members according to the present invention, the present invention is characterized by including at least one intermediate arm member having a rotational center hole; a central-pivot providing member which includes a central-pivot portion that is inserted into the rotational center hole of the intermediate arm member to be freely rotatable relative to the rotational center hole, and a retaining portion orthogonal to the central-pivot portion; and a retaining member which is fitted on a periphery of the central-pivot portion of the central-pivot providing member to prevent the intermediate arm member that is fitted on the central-pivot portion from moving in an axial direction between the retaining member and the retaining portion. The central-pivot portion of the central-pivot providing member and the retaining member are fixed to each other by laser welding.

According to an aspect of the invention, the central-pivot providing member includes a stepped shaft member which includes a solid shaft as the central-pivot portion and a large diameter portion as the retaining portion.

According to another aspect of the invention, the central-pivot providing member includes an end arm member which is different from the intermediate arm member and includes a burred cylindrical portion as the central-pivot portion and an arm portion as the retaining portion.

According to an aspect of the invention, the retaining member can include a metal bush which includes a cylindrical portion that is fitted on the periphery of the central-pivot portion and a flange portion.

According to another aspect of the invention, the retaining member can include an end arm member which is different from the intermediate arm member, and a burred cylindrical portion which is fitted on the periphery of the central-pivot portion is formed on the end arm member.

It is desirable for a thrust bush, made of synthetic resin, to be interposed between the rotational center hole of the intermediate arm member, which is fitted on the central-pivot portion of the central-pivot providing member, and the central-pivot portion.

According to an embodiment of a pivotal attaching method, the present invention is characterized by including a step of preparing at least one intermediate arm member having a rotational center hole, a central-pivot providing member which includes a central-pivot portion that is to be inserted into the rotational center hole of the intermediate arm member to be freely rotatable relative to the rotational center hole and a retaining portion which is orthogonal to the central-pivot portion, and a retaining member that is to be fitted on a periphery of the central-pivot portion of the central-pivot providing member to prevent said intermediate arm member that is fitted on the central-pivot portion from moving in an axial direction between the retaining member and the retaining portion; a step of inserting the central-pivot portion of the central-pivot providing member into the rotational center hole of the intermediate arm member and fitting the retaining member onto a periphery of a portion of the central-pivot portion which projects from the rotational center hole; and a step of fixing the central-pivot portion of the central-pivot providing member and the retaining member to each other by laser welding.

In this pivotal attaching method, it is desirable for the laser welding step to further include, prior to the laser welding step, a step of interposing a thrust bush, made of synthetic resin, between the rotational center hole of the intermediate arm member and the central-pivot portion of said central-pivot providing member.

In either of the pivotal mounting structure or method, it is desirable that the laser welding be performed, from radial directions, to portions of the central-pivot portion of the central-pivot providing member and the retaining member which superpose each other radially.

However, it is possible that the laser welding be performed, from a direction parallel to the axis, on a radial clearance between the central-pivot portion of the central-pivot providing member and the retaining member.

Specifically, the laser welding can be performed using YAG laser or carbon dioxide laser.

### ADVANTAGEOUS EFFECTS OF THE INVENTION

According to the present invention, since the rotational center hole of at least one intermediate arm member is fitted on the central-pivot portion of the central-pivot providing member and since the retaining member is fitted on the periphery of a portion of the central-pivot portion which projects from the rotational center hole and fixed by laser welding, relatively rotating members can be pivoted in a retained state without requiring large machinery such as swaging equipment and with no mechanical deformation being produced at all.

### BRIEF DESCRIPTION OF THE DRAWINGS

FIG. 1 shows an embodiment of a pivotal attaching structure for relatively rotating members according to the present invention, wherein (A) is an exploded perspective view, (B) is a longitudinal sectional view in an assembled state, (C) is a diagram viewed in the direction of the arrow C, and (D) is an enlarged schematic cross sectional view taken along the line D-D shown in (B).
FIG. 2 shows another embodiment of the pivotal attaching structure for relatively rotating members according to the present invention, wherein (A) is an exploded perspective view and (B) is a longitudinal sectional view in an assembled state.
FIG. 3 is a perspective view of yet another embodiment of the pivotal attaching structure for relatively rotating members according to the present invention.
FIG. 4 shows another embodiment of the pivotal attaching structure for relatively rotating members according to the present invention, wherein (A) is an exploded perspective view and (B) is a longitudinal sectional view in an assembled state.

### EMBODIMENTS

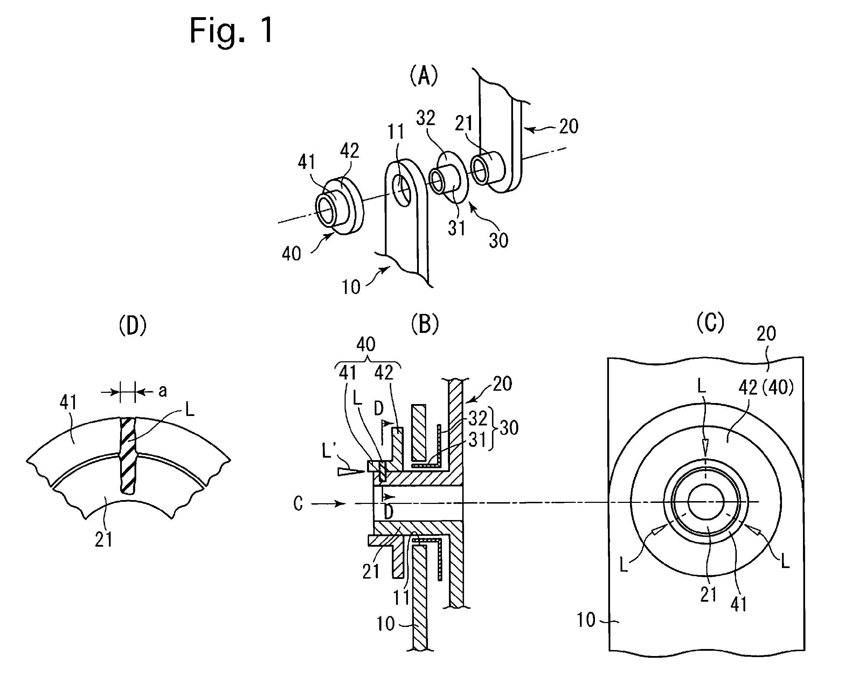

FIG. 1 shows a first embodiment of a pivotal attaching structure for relatively rotating members according to the present invention. This embodiment is a pivotal attaching structure in which a metal intermediate arm member 10 is pivoted on a metal end arm member 20, which is provided as a central-pivot providing member. A rotational center hole 11 is formed in one end of the intermediate arm member 10, and the end arm member 20 is provided at one end thereof with a burred cylindrical portion 21 as a central-pivot portion which is fitted into the rotational center hole 11. The remaining portion (arm portion) of the end arm portion 20 other than the burred cylindrical portion 21 constitutes a retaining portion. A thrust bush 30 made of synthetic resin is fitted on the periphery of the burred cylindrical portion 21, and a metal bush 40, as a retaining member, is fitted on a projecting portion of the burred cylindrical portion 21 which projects from the rotational center hole 11. The thrust bush 30 is provided with a cylindrical portion 31 which is positioned between the rotational center hole 11 and the burred cylindrical portion 21 to secure radial play, and a flange portion 32 which is positioned between the intermediate arm member 10 and the end arm member 20 to define the axial position. The metal bush 40 is provided with a cylindrical portion 41 which is fitted on the periphery of the burred cylindrical portion 21 and a flange portion 42 which contacts (faces) the intermediate arm member 10.

In the above illustrated first embodiment, as shown in FIG. 1(B), the position of each component is defined by fitting the burred cylindrical portion 21 of the end arm member 20, the thrust bush 30, the rotational center hole 11 of the intermediate arm member 10 and the metal bush 40 together, and in this state the burred cylindrical portion 21 and the cylindrical portion 41 are joined by laser welding. This laser welding is performed by applying laser light L, from radial directions, to portions of the burred cylindrical portion 21 and the cylindrical portion 41 which superpose each other radially as shown in FIGS. 1(C) and 1(D). The laser light can be applied at appropriate intervals in a circumferential direction (at intervals of 120 degrees in the illustrated embodiment).

A specific example of the laser welding operation will be discussed hereinafter.

The diameter of the fit-joint between the cylindrical portion 41 and the burred cylindrical portion 21: 8 mm; the thickness of each of the cylindrical portion 41 and the burred cylindrical portion 21: 1.4 mm; the laser system to be used: a fiber laser system available on the market (output: 5 kW); and the diameter of laser light application a (FIG. 1(D)): approximately 0.8 mm*φ*; under these conditions, favorable laser welding was possible. As a matter of course, the above-discussed embodiment is merely an example, and does not limit the scope of the present invention.

The depth of laser light application is determined so that the laser light penetrates the cylindrical portion 41 and stops within the burred cylindrical portion 21 (so as not to reach the inner periphery of the burred cylindrical portion 21). Thereupon, each laser-applied portion melts, as schematically shown inFIG. 1(D), so that the cylindrical portion 41 and the burred cylindrical portion 21 are joined.

As shown by the reference mark L' in FIG. 1 (B), the laser light for joining the burred cylindrical portion 21 and the cylindrical portion 41 can be applied, toward a minute radial clearance between the cylindrical portion 41 and the burred cylindrical portion 21, in a direction parallel to the pivot axis so that the burred cylindrical portion 21 and the cylindrical portion 41, which are positioned radially inside and outside the clearance, are melted and joined.

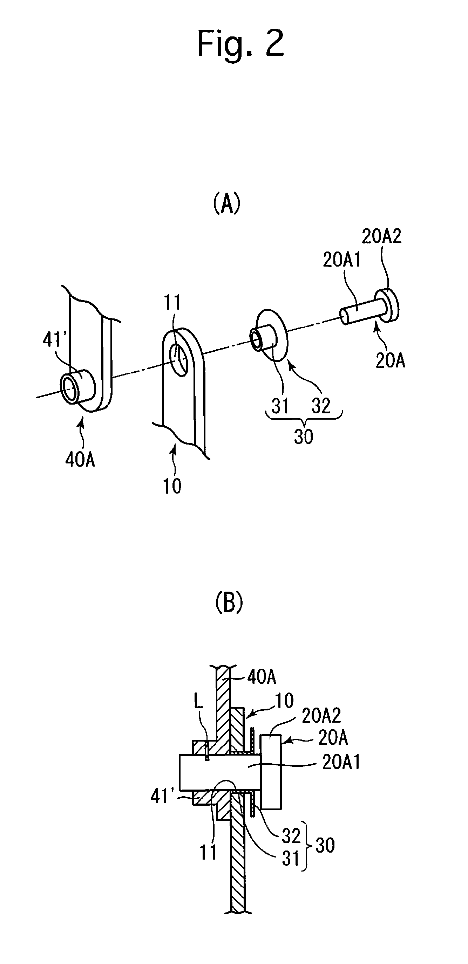

FIG. 2 shows a second embodiment of the pivotal attaching structure for relatively rotating members. In this embodiment, the end arm member 20 is replaced by a shaft member 20A and the metal bush 40 is replaced by an end arm member 40A. The shaft member 20A is a stepped shaft member which is provided with a solid shaft 20A1 which is inserted into the rotational center hole 11 of the intermediate arm member 10 and a large diameter portion (flange portion) 20A2 as a retaining portion. The end arm member 40A is provided with a burred cylindrical portion (cylindrical portion made by burring) 41' instead of the cylindrical portion 41 of the metal bush 40. The laser light L is applied, from radial directions, to portions of the burred cylindrical portion 41' and the solid shaft 20A1 which superpose each other radially.

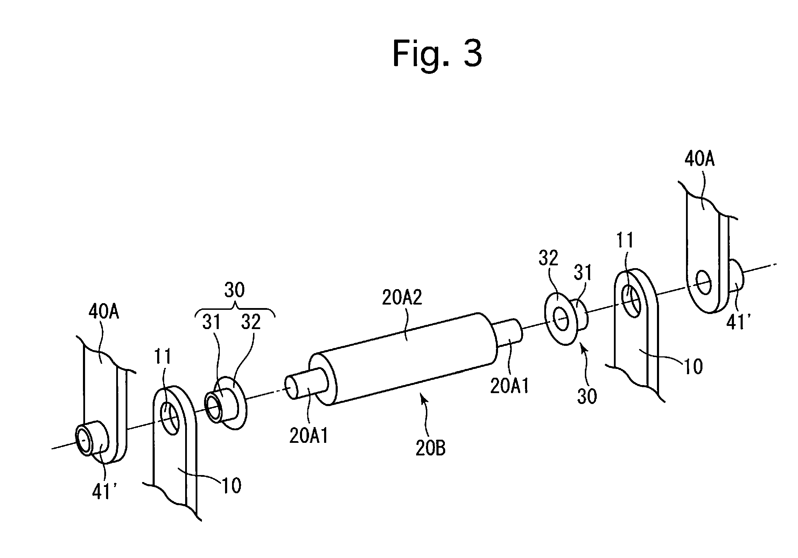

FIG. 3 shows a third embodiment according to the present invention in which the pivotal attaching structure shown in FIG. 2 is symmetrically arranged on both left and right sides of a stepped shaft member 20B. The stepped shaft member 20B is provided on the left and right sides thereof with solid shafts 20A1 having a small diameter, and is provided at the center with a large diameter portion 20A2. The bisymmetrical members are designated by the same reference numerals as those shown in FIG. 2. No laser-welded portions are shown in FIG. 3. Although not shown in FIG. 3, cross sections appear in a similar manner (symmetrical manner) to that in FIG. 2(B).

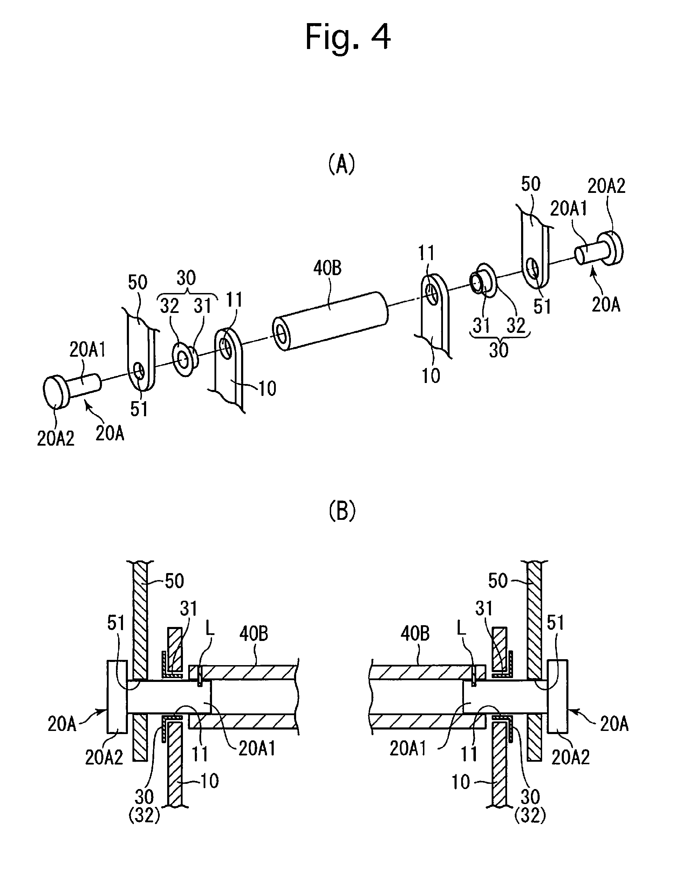

FIG. 4 shows a fourth embodiment according to the present invention. This embodiment is a bisymmetrical pivotal attaching structure for relatively rotating members, to which the present invention has been applied. Apair of stepped shaft members 20A, each of which is identical to the stepped shaft member 20A of the second embodiment, are symmetrically arranged outside; and a cylindrical body (pipe body) 40B, serving as a retaining member, into which solid shafts 20A1 of this pair of stepped shaft members are fitted, is arranged between the pair of stepped shaft members 20A. In addition, portions of the left and right stepped shaft members 20A and the cylindrical body 40B which superpose each other radially are joined by radial laser light L. Additionally, in this embodiment, second intermediate arm members 50, each having a rotational center hole 51 identical to the rotational center hole 11 of the intermediate arm portion(s) 10, are sandwiched between the large diameter portions 20A2 of the stepped shaft portions 20A and the cylindrical body 40B. Namely, the arm members, each having a rotational center hole, which are rotatably held between the stepped shaft members and the retaining member can be more than one in number.

### INDUSTRIAL APPLICABILITY

The present invention can be utilized for the pivotal attaching structure in general in which a rotating arm member is pivoted on a rotational center shaft, e.g., a retractable Ottoman mechanism, a door lock apparatus, a seat lifting apparatus, an X-arm type door glass lifting apparatus, or the like, for a vehicle.

### REFERENCE SIGNS LIST

L L' Laser light
10 Intermediate arm member
11 Rotational center hole
20 End arm member (central-pivot providing member)
20A 20B Stepped shaft member (central-pivot providing member)
20A1 Solid shaft (central-pivot portion)
20A2 Large diameter portion (retaining portion)
21 Burred cylindrical portion (central-pivot portion)
30 Thrust bush
31 Cylindrical portion
32 Flange portion
40 Metal bush (retaining member)
40A End arm member (retaining member)
40B Cylindrical body (retaining member)
41 Cylindrical member
41' Burred cylindrical portion
42 Flange portion
50 Second intermediate arm member
51 Rotational center hole

## Claims

1. A pivotal attaching structure for relatively rotating members which is **characterized by** comprising:
at least one intermediate arm member having a rotational center hole ;
a central-pivot providing member which includes a central-pivot portion that is inserted into said rotational center hole of said intermediate arm member to be freely rotatable relative to said rotational center hole, and a retaining portion orthogonal to said central-pivot portion; and
a retaining member which is fitted on a periphery of said central-pivot portion of said central-pivot providing member to prevent said intermediate arm member that is fitted on said central-pivot portion from moving in an axial direction between said retaining member and said retaining portion,
wherein said central-pivot portion of said central-pivot providing member and said retaining member are fixed to each other by laser welding.

2. The pivotal attaching structure for relatively rotating members according to claim 1, wherein said central-pivot providing member comprises a stepped shaft member which includes a solid shaft as said central-pivot portion and a large diameter portion as said retaining portion.

3. The pivotal attaching structure for relatively rotating members according to claim 1, wherein said central-pivot providing member comprises an end arm member which is different from said intermediate arm member and includes a burred cylindrical portion as said central-pivot portion and an arm portion as said retaining portion.

4. The pivotal attaching structure for relatively rotating members according to claim 1, wherein said retaining member comprises a metal bush which includes a cylindrical portion that is fitted on said periphery of said central-pivot portion and a flange portion.

5. The pivotal attaching structure for relatively rotating members according to claim 1, wherein said retaining member comprises an end arm member which is different from said intermediate arm member, and
wherein a burred cylindrical portion which is fitted on said periphery of said central-pivot portion is formed on said end arm member.

6. The pivotal attaching structure for relatively rotating members according to claim 1, wherein a thrust bush , made of synthetic resin, is interposed between said rotational center hole of said intermediate arm member, which is fitted on said central-pivot portion of said central-pivot providing member, and said central-pivot portion.

7. The pivotal attaching structure for relatively rotating members according to claim 1, wherein said laser welding is performed, from radial directions, on portions of said central-pivot portion of said central-pivot providing member and said retaining member which superpose each other radially.

8. The pivotal attaching structure for relatively rotating members according to claim 1, wherein said laser welding is performed, from a direction parallel to the pivot axis, toward a radial clearance between said central-pivot portion of said central-pivot providing member and said retaining member.

9. A method of pivotally attaching relatively rotating members, **characterized by** comprising:
a step of preparing at least one intermediate arm member having a rotational center hole , a central-pivot providing member which includes a central-pivot portion that is to be inserted into said rotational center hole of said intermediate arm member to be freely rotatable relative to said rotational center hole and a retaining portion which is orthogonal to said central-pivot portion, and a retaining member that is to be fitted on a periphery of said central-pivot portion of said central-pivot providing member to prevent said intermediate arm member that is fitted on said central-pivot portion frommoving in an axial direction between said retaining member and said retaining portion;
a step of inserting said central-pivot portion of said central-pivot providing member into said rotational center hole of said intermediate arm member and fitting said retaining member onto a periphery of a portion of said central-pivot portion which projects from said rotational center hole; and
a step of fixing said central-pivot portion of said central-pivot providing member and said retaining member to each other by laser welding.

10. The method of pivotally attaching relatively rotating members according to claim 9, wherein said laser welding step further comprises, prior to said laser welding step, a step of interposing a thrust bush, made of synthetic resin, between said rotational center hole of said intermediate arm member and said central-pivot portion of said central-pivot providing member.

11. The method of pivotally attaching relatively rotating members according to claim 9, wherein said laser welding step is performed, from radial directions, to portions of said central-pivot portion of said central-pivot providing member and said retaining member which superpose each other radially.

12. The method of pivotally attaching relatively rotating members according to claim 9, wherein said laser welding is performed, from a direction parallel to the pivot axis, on a radial clearance between said central-pivot portion of said central-pivot providing member and said retaining member.
